# EUROPEAN PATENT APPLICATION

(11) **EP 0 607 781 A1**
(43) Date of publication of application: **27.07.1994**
(21) Application number: 94100029.1
(22) Date of filing: 03.01.1994
(51) Int. Cl.: H01G 9/08

(54) **Solid electrolytic capacitor**

(30) Priority: 05.01.1993 JP 164/93
(71) Applicant: NEC CORPORATION, Tokyo (JP)
(72) Inventor: Fukaumi, Takashi, c/o NEC Corporation, Tokyo (JP)
(74) Representative: Pätzold, Herbert, Dr.-Ing.

(57) **Abstract**

A solid electrolytic capacitor superior in high-temperature endurance is provided. The capacitor includes a capacitor element (10) and a resin sheathing (8) which covers the entirety of the element. The element has an anode body (1) made of metal having film-forming properties, a dielectric film (2) made of anodic-oxide which covers the anode body, a conducting polymer film (3) as a solid electrolyte formed on the dielectric film, and a cathode film (4) formed on the polymer compound film. The resin sheathing (8) contains a substance (7) for absorbing oxygen dispersed therein. Oxygen containing in the atmospheric air is inhibited to reach the capacitor element (10) through the resin sheathing (8) by the oxygen-absorbing substance (7) dispersed in the resin sheathing.

## Description

### BACKGROUND OF THE INVENTION

### 1. Field of the Invention

The present invention relates to a solid electrolytic capacitor and more particularly, to a solid electrolytic capacitor having a conducting polymer as a solid electrolyte.

### 2. Description of the Prior Art

A first example of conventional solid electrolytic capacitors is shown in Fig. 1, which is disclosed in the Japanese Non-Examined Patent Publication No. 3 - 163814. The capacitor of the first example has a capacitor element 20. The element 20 is composed of an anode body 11, an anode wire 16 fixed on the top face of the anode body 11, a dielectric film 12 made of anodic-oxide which covers the bottom and side faces of the anode body 11, a metallic oxide film 19 as a solid electrolyte which is formed on the dielectric film 12 and is made of manganese dioxide, lead dioxide or the like, and a cathode film 14 which is formed on the dielectric film 12 and is made of electrically conductive paste such as graphite, silver or the like.

The anode body 11 is made of metal having film-forming properties and valve actions such as tantalum, aluminum or the like and the surface area of the body 11 is enlarged.

A lead frame 15b is connected to the end of the anode wire 16 and a lead frame 15a is connected to the cathode film 14 using a electrically conductive paste film 21 made of silver or the like.

The capacitor element 20 and the bottom portions of the lead frames 15a and 15b are buried in a parallelepiped resin sheathing 18 made of epoxy resin. The other portions of the lead frames 15a and 15b project from the resin sheathing 18 and bent like an "L" character along the surfaces of the sheathing 18.

A second example of conventional solid electrolytic capacitors is disclosed in the Japanese Non-Examined Patent Publication No. 52 - 79255. In the capacitor of the second example, 7, 7', 8, 8'-tetracyanoquinodimethane (TCNQ) complex is employed as the solid electrolyte, instead of the metallic oxide film 19 made of manganese dioxide, lead dioxide or the like in the first example. The other structures and materials are the same as those of the first embodiment.

Recently, electronic devices and apparatus have been compactized, increased in speed and digitalized. Under such circumstances, solid electrolytic capacitors having better electrical characteristics have been required to be developed.

In response to such requirements, a solid electrolytic capacitor was developed, which employs a conducting polymer of the aromatic compounds such as polypyrrole with a high electrical conductivity as the solid electrolyte, and its capacitor element is buried in a molded resin sheathing made of epoxy or silicone resin.

However, the capacitor employing the conducting polymer of the aromatic series has a disadvantage that the conducting polymer is easy to be oxidized. Therefore, when the capacitor is held in a high-temperature condition, oxygen contained in the atmospheric air diffuses through the resin sheathing to oxide the conducting polymer, and as a result, the Equivalent Series Resistance (ESR) of the capacitor at high-frequencies increases due to reduction of its electric conductivity.

To solve the problem, third and fourth examples of conventional solid electrolytic capacitors are developed, which are disclosed in the Japanese Non-Examined Patent Publication Nos. 3 - 109714 and 3 - 109712, respectively.

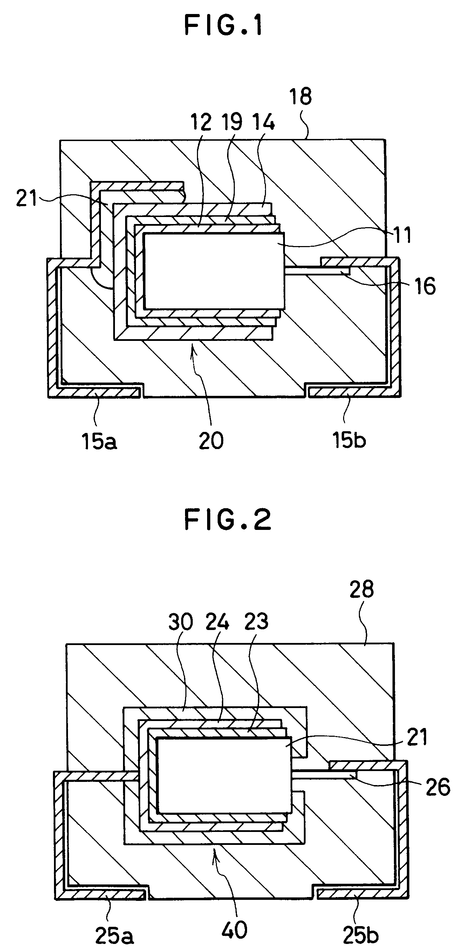

The capacitor of the third example is shown in Fig. 2. A capacitor element 40 is composed of an anode body 21, an anode wire 26 fixed on the top face of the anode body 21, a conducting polypyrrole film 23 which covers the bottom and side faces of the anode body 21, a cathode film 24 which is formed on the conducting polypyrrole film 23 and is made of electrically conductive paste, and a barrier film 30 formed on the cathode film 24 for blocking or inhibiting oxygen to reach the capacitor element 40. The barrier layer 30 is made of resin.

A lead frame 25b is connected to the end of the anode wire 26 and a lead frame 25a is connected to the cathode film 24 at the bottom face of the element 40.

The capacitor of the fourth example is substantially similar in configuration to that of the third example other than that a barrier layer is made of metal instead of resin.

Fifth and sixth examples of conventional solid electrolytic capacitors are disclosed in the Japanese Non-Examined Patent Publication Nos. 3 - 127813 and 63 - 181309, respectively. In the fifth and sixth examples, a heat-treatment process as a part of the fabrication sequence is carried out under an inert-gas atmosphere. The part of the fabrication sequence is that from a process of forming a conducting polymer film to a process prior to that of forming a resin sheathing, or that from a process subsequent to a process of forming a conducting polymer film to a process of forming a resin sheathing.

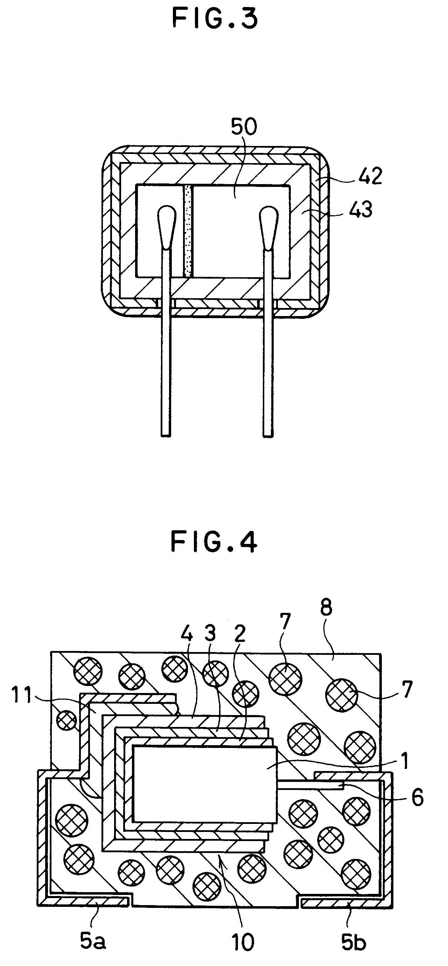

Fig. 3 shows a seventh example of conventional solid electrolytic capacitors, which is disclosed in the Japanese Non-Examined Utility-Model publication No. 1-121918. In Fig. 3, a capacitor element 50 is covered with an insulator frame 42 so that there is a gap between the surface of the element 50 and the frame 42. The gap is filled with resin or fats and oils 43 which contain no oxygen atom in the structural formula or which generate no activated oxygen. A resin sheathing (not shown) covers the entire surface of the frame 42.

With the above third and fourth conventional examples, the barrier film 30 is formed for blocking oxygen diffusion through the resin sheathing 28 and then, the sheathing 28 is formed thereon. As a result, there is a disadvantage that an additional process for providing the barrier film 30 is required.

With the fourth conventional example, the capacitor element 40 is required to be heated at a high temperature to make the metal film as the barrier film, for example, 200 to 300 °C in the case of solder. Therefore, there arises a phenomenon of "dopant desorption" so that the conducting polypyrrole film 23 decreases in electrical conductivity, resulting in increase of the ESR at high-frequencies.

With the fifth and sixth conventional examples, the part of the fabrication sequence is required to be carried out in a closed casing or chamber. Therefore, working efficiency becomes very low, which means that they are unsuitable for mass production.

Further, with the seventh conventional example, it is difficult for the insulator frames 42 to cover the individual capacitor elements 50 and position them at desired states. Besides, the fabrication cost of the capacitor becomes higher due to the frames 42.

### SUMMARY OF THE INVENTION

Accordingly, an object of the present invention is to provide a solid electrolytic capacitor superior in high-temperature endurance.

Another object of the present invention is to provide a solid electrolytic capacitor in which its electrical conductivity does not reduce due to oxygen contained in the atmospheric air and/or heat applied during its fabrication sequence without reduction of working efficiency.

Still another object of the present invention is to provide a solid electrolytic capacitor which needs no additional part or component and provides no increase in cost.

A solid electrolytic capacitor according the present invention includes a capacitor element and a resin sheathing which covers the entirety of the element. The element has an anode body made of metal having film-forming properties, a dielectric film made of anodic-oxide which covers the anode body, a conducting polymer compound film as a solid electrolyte formed on the dielectric film, and a cathode film formed on the polymer film.

The resin sheathing contains a substance for absorbing oxygen dispersed therein.

With the solid electrolytic capacitor of the present invention, the oxygen-absorbing substance is dispersed in the resin sheathing, so that oxygen containing in the atmospheric air can be inhibited to reach the capacitor element through the resin sheathing. In addition, excessive heat does not applied to the capacitor during the fabrication sequence.

Accordingly, the solid electrolytic capacitor is very difficult to be reduced in electrical conductivity due to oxygen contained in the atmospheric air and heat applied during its fabrication sequence. This means that the capacitor is superior in high-temperature endurance.

Since the dispersion of the oxygen-absorbing substance in the resin sheathing is sufficient for high-temperature endurance, the capacitor needs no additional part or component and provide no increase in cost. Further, working efficiency does not reduced.

### BRIEF DESCRIPTION OF THE DRAWINGS

Fig. 1 is a cross section showing first and second conventional solid electrolytic capacitors.

Fig. 2 is a cross section showing third and fourth conventional solid electrolytic capacitors.

Fig. 3 is a cross section showing a seventh conventional solid electrolytic capacitor.

Fig. 4 is a cross section of a solid electrolytic capacitor according to a first example of the present invention.

Fig. 5 is a cross section of a solid electrolytic capacitor according to a third example of the present invention.

### DETAILED DESCRIPTION OF THE INVENTION

As described above, the solid electrolytic capacitor according the present invention includes the capacitor element and the resin sheathing which covers the entirety of the element.

The capacitor element may be of any structure if it contains the anode body, the dielectric film made of anodic-oxide, the conducting polymer compound film as the solid electrolyte, and the cathode film.

The anode body may be made of any metal having film-forming properties. Preferably, the anode body is a sintered body or metal foil or leaf of tantalum, aluminum or the like.

The dielectric film is made of anodic-oxide of the metal making the anode body.

The conducting polymer compound film as a solid electrolyte may be made of any conducting polymer compound. However, preferably, it is made of a cyclic compound, for example, polypyrrol, polythiophen and polyfuran, and their derivatives. An example of the derivatives is a polymer of N-methylpyrrole.

The cathode film may be made of any conducting film. Preferably, it is made of an electrically conductive paste such as graphite, silver or the like.

The resin sheathing contains the oxygen-absorbing substance dispersed therein. The substance is a bivalent metalcomplex, for example, metalloporphyrin and metallosalcomine and their derivatives.

### EXAMPLES

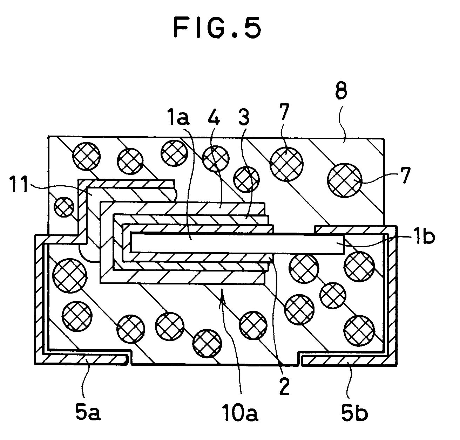

Examples of the present invention will be described below referring to Figs. 4 and 5.

### [First Example]

Fig. 3 shows a solid electrolytic capacitor of a first embodiment, which has a capacitor element 10 buried in a parallelepiped resin sheathing 8.

The capacitor element 10 is composed of a tantalum anode body 1, a tantalum anode wire 6 fixed on the top face of the anode body 1, a dielectric film 2 of anodic-oxide which covers the bottom and side faces of the anode body 1, a conducting polypyrrol film 3 as a solid electrolyte which is formed on the dielectric film 2, and a cathode film 4 of electrically conductive paste such as graphite, silver or the like which is formed on the dielectric film 2.

The anode body 1 is made of a sintered body of tantalum having film-forming properties and valve actions.

A lead frame 5b is connected to the end of the anode wire 6 and a lead frame 5a is connected to the cathode film 4 using a silver paste film 11.

Similar to the first and second conventional examples shown in Fig. 1, the capacitor element 10 and the bottom portions of the lead frames 5a and 5b are buried in the parallelepiped resin sheathing 8 made of epoxy resin. The other portions of the lead frames 5a and 5b project from the resin sheathing 8 and bent like an "L" character along the surfaces of the sheathing 8.

The resin sheathing 8 contains particles 7 of a bivalent metallic complex dispersed therein as the oxygen-absorbing substance.

The solid electrolytic capacitor having the above-described structure was practically fabricated and tested to confirm its advantages or effects according to the following sequence:
First, the rectangular parallepiped anode body 1 was prepared by sintering tantalum powders. The anode wire 6 was fixed at the top face of the anode body 1 during the sintering process. The anode body 1 was 3.5 mm x 3.0 mm in planar shape and was 1.5 mm in thickness.

Next, the tantalum anode body 1 was anodic-oxidized in an aqueous solution of phosphoric acid with an applied voltage of 90 volt. The anode body 1 thus anodic-oxidized was washed and dried to get a pellet whose bottom and side faces were covered with a dielectric film 2 of anodic-oxide.

It was seen that the capacitance of the pellet in the water solution of phosphoric acid was 15 µF.

Subsequently, the pellet with the dielectric film 2 was dipped into a methanol solution of iron (III) dodecylbenzenesulfonate whose concentration is 20 wt% at room temperature, and then dried at 60 °C. The pellet was dipped into a water solution of pyrrol whose concentration is 1 mol % and held in 30 minutes therein. As a result, the conducting polypyrrol film 3 was formed on the surface of the pellet due to polymerization of pyrrol.

The element 10 with the polypyrrol film 3 was washed by ethanol and dried. Then, the electrically conductive paste film was formed on the polypyrrol film 3 as the cathode film 4. Thus, the capacitor element 10 was obtained.

The lead frame 5a is connected to the cathode film 4 using the silver paste film 11 at the bottom and side faces of the anode body 1. On the other hand, the lead frame 5b was connected to the end of the tantalum anode wire 6 by welding.

Subsequently, the epoxy resin sheathing 8 was formed by molding so that the element 10 was entirely buried into the sheathing 8. The epoxy resin contains the particles 7 of the bivalent metallic complex such as porphyrin, salcomine and derivatives of the bivalent metallic complex as the oxygen-absorbing substance.

Thus, the solid electrolytic capacitor shown in Fig. 4 was obtained.

The capacitor was tested about electrostatic capacitance at 120 Hz, tangent of a dielectric loss angle δ at 120 Hz and ESR at 100 Khz. The testing results are as follows:
With the capacitor of the first embodiment, capacitance at 120 Hz was 15.0 µF, tan δ was 2.0 % at 120 Hz and ESR at 100 kHz was 80 mΩ. The same tests were carried out after holding the capacitor at 105 °C in 500 hours, and as a result, capacitance at 120 Hz was 14.9 µF, tan δ at 120 Hz was 2.2 % and ESR at 100 kHz was 85 mΩ. It was seen from the results that the capacitor of the first embodiment is superior in high-temperature endurance.

To compared with the capacitor of the first embodiment, the conventional capacitors was made through the same sequence other than that the resin sheathing does not contain the oxygen-absorbing substance.

As a result, with the conventional capacitor, capacitance at 120 Hz was 15.0 µF, tan δ at 120 Hz was 2.0 % and ESR at 100 kHz was 80 mΩ, which is the same as those of the first embodiment. After holding at 105 °C in 500 hours, capacitance at 120 Hz became 14.5 µF, tan δ at 120 Hz became 3.1 % and ESR at 100 kHz became 103 mΩ.

It was seen from the results that the conventional capacitor is inferior in high-temperature endurance compared with the first embodiment.

In addition, the same results ware obtained in the case of polythiophen or polyfuran was employed instead of polypyrrol.

### [Second Example]

A solid electrolytic capacitor of a second embodiment was made by the same fabrication sequence as that of the first embodiment excepting that a methanol solution of iron (III) p-toluenesulfonate whose concentration is 20 wt% was employed in the process of forming the conducting polypyrrol film 3.

With the capacitor of the second embodiment, capacitance at 120 Hz was 15.0 µF, tan δ was 2.0 % at 120 Hz and ESR at 100 kHz was 80 mΩ. After holding the capacitor at 105 °C in 500 hours, capacitance at 120 Hz became 14.9 µF, tan δ at 120 Hz became 2.3 % and ESR at 100 kHz became 88 mΩ.

It was seen from the results that the capacitor of the second embodiment is also superior in high-temperature endurance.

### [Third Example]

Fig. 4 shows a solid electrolytic capacitor of a third embodiment, which has a capacitor element 10a buried in a parallelepiped resin sheathing 8.

The capacitor element 10a is composed of an aluminum anode body 1a, a dielectric film 2 of anodic-oxide which covers the bottom and side faces of the anode body 1a, a conducting polypyrrol film 3 as a solid electrolyte which is formed on the dielectric film 2, and a cathode film 4 of electrically conductive paste such as graphite, silver or the like which is formed on the dielectric film 2.

The anode body 1 is made of a foil or leaf of aluminum having film-forming properties and valve actions, different from the first and second embodiments.

Similar to the first and second embodiments, a lead frame 5b is connected to the end of the anode wire 6 and a lead frame 5a is connected to the cathode film 4 using a silver paste film 11. The capacitor element 10a and the bottom portions of the lead frames 5a and 5b are buried in the parallelepiped resin sheathing 8 made of epoxy resin. The other portions of the lead frames 5a and 5b project from the resin sheathing 8 and bent like an "L" character along the surfaces of the sheathing 8.

The resin sheathing 8 also contains particles 7 of a bivalent metallic complex dispersed therein as the oxygen-absorbing substance.

The solid electrolytic capacitor having the above-described structure was made by the following fabrication sequence:
First, the anode body 1a was prepared using an aluminum foil or leaf whose surface area was enlarged. The anode body 1 was 5 mm x 3 mm in planar shape and was 150 µm in thickness.

Next, the aluminum anode body 1a was electrolytic-oxidized in ammonium adipate with an applied voltage of 90 volt. The anode body 1a thus electrolytic-oxidized was washed and dried to get a pellet whose bottom and side faces were covered with the dielectric film 2 of anodic-oxide.

Subsequently, the pellet with the dielectric film 2 was processed by the same sequence as that of the first embodiment and then , the solid electrolytic capacitor shown in Fig. 5 was obtained.

With the capacitor of the third embodiment, capacitance at 120 Hz was 1.5 µF, tan δ at 120 Hz was 1.5 % and ESR at 100 kHz was 52 mΩ. After holding the capacitor at 105 °C in 500 hours, capacitance at 120 Hz became 1.45 µF, tan δ at 120 Hz became 1.7 % and ESR at 100 kHz became 54 mΩ.

It was seen from the results that the capacitor of the third embodiment is also superior in high-temperature endurance.

The results of the first to third examples and those of the prior art are shown in the following tables 1 and 2.

**TABLE 1**

| (INITIAL VALUES) | | | |
|---|---|---|---|
| | CAPACITANCE (µF) | tan δ (%) | ESR (mΩ) |
| PRIOR ART | 15.0 | 2.0 | 80 |
| FIRST EXAMPLE | 15.0 | 2.0 | 80 |
| SECOND EXAMPLE | 15.0 | 2.0 | 80 |
| THIRD EXAMPLE | 1.5 | 1.5 | 52 |

**TABLE 2**

| (VALUES AFTER HEATING) | | | |
|---|---|---|---|
| | CAPACITANCE (µF) | tan δ (%) | ESR (mΩ) |
| PRIOR ART | 14.5 | 3.1 | 103 |
| FIRST EXAMPLE | 14.9 | 2.2 | 85 |
| SECOND EXAMPLE | 14.9 | 2.3 | 88 |
| THIRD EXAMPLE | 1.45 | 1.7 | 54 |

In addition, the same results were obtained in the case of polythiophen or polyfuran was employed instead of polypyrrol.

## Claims

1. A solid electrolytic capacitor comprising:
a capacitor element;
a resin sheathing which covers an entirety of said capacitor element;
said capacitor element having an anode body made of metal having film-forming properties, a dielectric film made of anodic-oxide which covers said anode body, a conducting polymer film as a solid electrolyte formed on said dielectric film, and a cathode film formed on said conducting polymer film; and
said resin sheathing containing an oxygen-absorbing substance dispersed in said sheathing:
wherein oxygen containing in the atmospheric air is inhibited to reach said capacitor element through said resin sheathing.

2. A solid electrolytic capacitor as claimed in claim 1, wherein said conducting polymer film as a solid electrolyte is made of a cyclic compound selected from the group consisting of polypyrrol, polythiophen, polyfuran and their derivatives.

3. A solid electrolytic capacitor as claimed in claim 1, said oxygen-absorbing substance dispersed in said resin sheathing is a bivalent metalcomplex selected from the group consisting of metalloporphyrin, metallosalcomine and their derivatives.

4. A solid electrolytic capacitor comprising:
a capacitor element;
an epoxy resin sheathing which covers an entirety of said capacitor element;
said capacitor element having an anode body made of one of tantalum and aluminum, a dielectric film made of anodic-oxide which covers said anode body, a conducting polymer film as a solid electrolyte formed on said dielectric film, and a cathode film made of an electrically conductive paste and formed on said conducting polymer film; and
said epoxy resin sheathing containing an oxygen-absorbing substance dispersed in said sheathing:
wherein oxygen containing in the atmospheric air is inhibited to reach said capacitor element through said resin sheathing.

5. A solid electrolytic capacitor as claimed in claim 4, wherein said conducting polymer film as a solid electrolyte is made of a cyclic compound selected from the group consisting of polypyrrol, polythiophen, polyfuran and their derivatives.

6. A solid electrolytic capacitor as claimed in claim 4, said oxygen-absorbing substance dispersed in said resin sheathing is a bivalent metalcomplex selected from the group consisting of metalloporphyrin, metallosalcomine and their derivatives.
